# EUROPEAN PATENT APPLICATION

(11) **EP 4 813 214 A1**
(43) Date of publication of application: **30.09.2026**
(21) Application number: 24906795.0
(22) Date of filing: 04.06.2024
(51) Int. Cl.: A23L 2/52, A23F 5/24, A23L 2/38, A23L 2/62

(54) **PACKAGED BEVERAGE CONTAINING CDP-CHOLINE**

(30) Priority: 22.12.2023 JP 2023217080
(71) Applicant: KIRIN HOLDINGS KABUSHIKI KAISHA, Nakano-ku, Tokyo 164-0001 (JP); Kyowa Hakko Bio Co., Ltd., Tokyo 100-8185 (JP)
(72) Inventor: ONITSUKA Yuri, Tokyo 164-0001 (JP); GOTO Takeaki, Tokyo 164-0001 (JP); NAKAZAKI Eri, Tokyo 100-8185 (JP); AIKAWA Yui, Tokyo 164-0001 (JP)
(74) Representative: Hoffmann Eitle
(86) International application number: PCT/JP2024/020373
(87) International publication number: WO 2025/134405

(57) **Abstract**

A heat-sterilized packaged beverage containing a protein and/or a lipid, and CDP-choline or a salt thereof, wherein the total content of the protein and/or the lipid is 0.1 to 12 g/100 mL, the content of CDP-choline or a salt thereof is 1 to 500 mg/100 mL, and the protein and/or the lipid contains an animal-derived protein and/or lipid.

## Description

### Technical Field

The present invention relates to a packaged beverage containing CDP-choline.

### Background Art

In packaged beverages containing proteins and lipids, such as coffee with milk and protein beverages, proteins and lipids in the product are denatured and aggregated by heat during sterilization and by deterioration over time, resulting in the occurrence of floating matter and sediment. Even in very small amounts, such floating matter and sediment are conspicuous and are factors that degrade the appearance quality of the product.

As a method of stabilizing beverages containing milk components, a method of adjusting the type and amount of emulsifiers such as sucrose fatty acid esters has been reported (Patent Literatures 1 to 3). However, since emulsifiers generate bitterness and oily odors, the above-described method imposes constraints on flavor design. In addition, there are cases where consumers do not prefer the labeling of "emulsifier" as an ingredient.

As another method, a method of adding thickening polysaccharides has also been reported (Patent Literature 4). However, in this case, the viscosity of the product changes, which affects flavor design in the same manner as described above. As yet another method, a method of adjusting the amounts of components derived from coffee or milk has also been proposed (Patent Literatures 5 and 6); however, when such a method is adopted, constraints on flavor design are also imposed. As described above, a versatile technology for stabilizing beverages containing milk raw materials has not been found.

### Citation List

### Patent Literature

Patent Literature 1: Japanese Unexamined Patent Publication No. H11-075683
Patent Literature 2: Japanese Unexamined Patent Publication No. 2000-333599
Patent Literature 3: Japanese Unexamined Patent Publication No. 2002-065157
Patent Literature 4: Japanese Unexamined Patent Publication No. 2014-110783
Patent Literature 5: Japanese Unexamined Patent Publication No. 2008-199950
Patent Literature 6: Japanese Unexamined Patent Publication No. 2015-136309

### Summary of Invention

### Technical Problem

One aspect of the present invention aims to provide a packaged beverage having excellent dispersion stability and a method for producing the same.

### Solution to Problem

The present inventors found that a packaged beverage having excellent dispersion stability can be obtained by incorporating CDP-choline or a salt thereof in a beverage containing milk raw materials and subjecting the beverage to heat sterilization, and have completed the present invention.

The present invention relates to the following [1] to [16].
[1] A heat-sterilized packaged beverage containing a protein and/or a lipid, and CDP-choline or a salt thereof, wherein a total content of the protein and/or the lipid is 0.1 to 12 g/100 mL, wherein a content of CDP-choline or a salt thereof is 1 to 500 mg/100 mL, and wherein the protein and/or the lipid contains an animal-derived protein and/or lipid.
[2] The packaged beverage according to [1], further containing a plant-derived component.
[3] The packaged beverage according to [2], wherein the plant-derived component contains a polyphenol.
[4] The packaged beverage according to any one of [1] to [3], containing a milk raw material, wherein the milk raw material is one or more selected from the group consisting of cow's milk, whole milk powder, skim milk powder, cream, whey, and a salt of casein.
[5] The packaged beverage according to any one of [1] to [4], wherein the total content of the protein and/or the lipid is 0.5 to 8 g/100 mL.
[6] The packaged beverage according to any one of [2] to [5], wherein the plant-derived component is a coffee extract and the packaged beverage is a coffee beverage.
[7] A production method for a packaged beverage, including: preparing a raw material liquid containing a protein and/or a lipid, and CDP-choline or a salt thereof, wherein a total content of the protein and/or the lipid is 0.1 to 12 g/100 mL, a content of CDP-choline or a salt thereof is 1 to 500 mg/100 mL, and the protein and/or the lipid contains an animal-derived protein and/or lipid; and heat-sterilizing the raw material liquid.
[8] The production method according to [7], wherein the raw material liquid further contains a plant-derived component.
[9] The production method according to [8], wherein the plant-derived component contains a polyphenol.
[10] The production method according to any one of [7] to [9], wherein the raw material liquid contains a milk raw material, and wherein the milk raw material is one or more selected from the group consisting of cow's milk, whole milk powder, skim milk powder, cream, whey, and a salt of casein.
[11] The production method according to any one of [8] to [10], wherein the plant-derived component is a coffee extract and the packaged beverage is a coffee beverage.
[12] A dispersion stabilizer for a packaged beverage containing a protein and/or a lipid, the dispersion stabilizer containing CDP-choline or a salt thereof as an active ingredient.
[13] A method for stabilizing dispersion of a packaged beverage containing a protein and/or a lipid, including: preparing a raw material liquid containing a protein and/or a lipid, and CDP-choline or a salt thereof, wherein a total content of the protein and/or the lipid is 0.1 to 12 g/100 mL, a content of CDP-choline or a salt thereof is 1 to 500 mg/100 mL, and the protein and/or the lipid contains an animal-derived protein and/or lipid; and heat-sterilizing the raw material liquid.
[14] A heat-sterilized packaged beverage containing a protein and/or a lipid, and CDP-choline or a salt thereof, wherein a total content of the protein and/or the lipid is 0.1 to 12 g/100 mL, wherein a content of CDP-choline or a salt thereof is 36 to 500 mg/100 mL, and wherein the protein and/or the lipid is a plant-derived protein and/or lipid.
[15] A production method for a packaged beverage, including: preparing a raw material liquid containing a protein and/or a lipid, and CDP-choline or a salt thereof, wherein a total content of the protein and/or the lipid is 0.1 to 12 g/100 mL, a content of CDP-choline or a salt thereof is 36 to 500 mg/100 mL, and the protein and/or the lipid is a plant-derived protein and/or lipid; and heat-sterilizing the raw material liquid.
[16] A method for stabilizing dispersion of a packaged beverage containing a protein and/or a lipid, including: preparing a raw material liquid containing a protein and/or a lipid, and CDP-choline or a salt thereof, wherein a total content of the protein and/or the lipid is 0.1 to 12 g/100 mL, a content of CDP-choline or a salt thereof is 36 to 500 mg/100 mL, and the protein and/or the lipid is a plant-derived protein and/or lipid; and heat-sterilizing the raw material liquid.

### Advantageous Effects of Invention

According to one aspect of the present invention, a packaged beverage having excellent dispersion stability and a method for producing the same are provided.

### Description of Embodiments

Hereinafter, preferred embodiments of the present invention will be described in detail. However, the present invention is not limited to the following embodiments.

One embodiment of the present invention is a heat-sterilized packaged beverage containing a protein and/or a lipid, and CDP-choline or a salt thereof, wherein the total content of the protein and/or the lipid is 0.1 to 12 g/100 mL and the content of CDP-choline or a salt thereof is 1 to 500 mg/100 mL.

A packaged beverage includes a container and a beverage filled in the container. In the present specification, when a packaged beverage is said to contain a certain component, it means that the beverage filled in the container contains the component. In addition, the content of each component means an amount based on the amount of the beverage filled in the container, unless otherwise specified.

The packaged beverage may contain a milk raw material. As the milk raw material, milk raw materials commonly used in packaged beverages can be used as appropriate. Examples of the milk raw material include animal-derived milk raw materials and plant-derived milk raw materials. An animal-derived milk raw material means animal-derived milk or a processed product of animal-derived milk. The animal-derived milk may be cow's milk, buffalo milk, sheep milk, goat milk, mare's milk, or the like. Examples of processed products of cow's milk include concentrated milk, skim milk, concentrated skim milk, skim milk powder, whole milk powder, cream, whey, butter, buttermilk, condensed milk, lactose, milk protein concentrate, whey protein concentrate, and casein and a salt thereof. The salt of casein may be, for example, an alkali metal salt. Examples of the alkali metal salt of casein include calcium caseinate (casein Ca) and sodium caseinate (casein Na).

Examples of plant-derived milk raw materials include soy milk, oat milk, rice milk, almond milk, and coconut milk.

As the milk raw material, one of the above-described materials may be used alone, or two or more thereof may be used in combination. The milk raw material may be, for example, one or more selected from the group consisting of cow's milk, whole milk powder, skim milk powder, cream, whey, and a salt of casein.

The milk raw material is not particularly limited, but may contain a milk raw material in which the total content of the protein and/or the lipid based on the total amount of the milk raw material is 1 to 95% by mass. The total content of the protein and/or the lipid in the milk raw material may be 3% by mass or more, or 5% by mass or more, and may be 90% by mass or less, 70% by mass or less, or 60% by mass or less, based on the total amount of the milk raw material.

The protein and/or the lipid contained in the packaged beverage according to one embodiment may contain an animal-derived protein and/or lipid, and may also contain a plant-derived protein and/or lipid. The protein and/or the lipid may be an animal-derived protein and/or lipid. In another embodiment, the protein and/or the lipid may be a plant-derived protein and/or lipid. An animal-derived protein and/or lipid means a protein and/or a lipid derived from an animal-derived raw material (for example, an animal-derived milk raw material), and a plant-derived protein and/or lipid means a protein and/or a lipid derived from a plant-derived raw material (for example, a plant-derived milk raw material).

The protein and/or the lipid contained in the packaged beverage according to one embodiment may be derived from at least one of the above-described milk raw materials. The protein and/or the lipid is, for example, derived from one or more raw materials selected from the group consisting of cow's milk, whole milk powder, skim milk powder, cream, whey, and a salt of casein.

In the packaged beverage according to one embodiment, the total content of the protein and/or the lipid is 0.1 to 12 g/100 mL. The total content of the protein and/or the lipid may be 0.2 g/100 mL or more, 0.3 g/100 mL or more, 0.5 g/100 mL or more, 1 g/100 mL or more, 3 g/100 mL or more, or 5 g/100 mL or more. The total content of the protein and/or the lipid derived from the milk raw material may be 0.2 g/100 mL or more, 0.3 g/100 mL or more, or 0.5 g/100 mL or more. The higher the content of the protein and/or the lipid, the more likely the stability of the packaged beverage is to deteriorate when subjected to a heat load during heat sterilization, and the more likely floating matter and sediment are to occur due to aggregation of the protein and/or the lipid. However, the above-described packaged beverage has excellent dispersion stability even when it contains a large amount of protein and/or lipid. The total content of the protein and/or the lipid may be 11.8 g/mL or less, 11.5 g/mL or less, 11.3 g/mL or less, 10.5 g/mL or less, 10 g/100 mL or less, 9 g/100 mL or less, 8 g/100 mL or less, or 7 g/100 mL or less, from the viewpoint of suppressing scorching during heat sterilization. In addition, the total content of the protein and/or the lipid derived from the milk raw material may be 10 g/100 mL or less, 9 g/100 mL or less, 8 g/100 mL or less, or 7 g/100 mL or less, from the viewpoint of suppressing scorching during heat sterilization.

The content of protein in the present specification means a value calculated by the combustion method for protein among the analytical methods for nutritional components and the like based on the Japanese Food Labeling Act. In addition, the content of lipid in the present specification means a value calculated by converting the value calculated by the gas chromatographic method for saturated fatty acids and unsaturated fatty acids among the analytical methods for nutritional components and the like based on the Japanese Food Labeling Act into total lipid in accordance with the Standard Tables of Food Composition in Japan and "Methods of Analysis for Nutrition Labeling (1993, AOAC)". These methods for calculating protein and total lipid are methods corresponding to nutritional labeling in the United States. The content ratio of protein to lipid is not particularly limited.

CDP-choline is a compound in which cytidine diphosphate (CDP) is bonded to choline via a phosphate ester bond, and is also referred to as "citicoline" or "cytidine 5'-diphosphocholine." CDP-choline has excellent solubility in water and is stable to oxygen and heat, and therefore it can be easily added to packaged beverages.

Examples of salts of CDP-choline include acid addition salts, metal salts, substituted or unsubstituted ammonium salts, organic amine addition salts, and amino acid addition salts and the like. Examples of acid addition salts include inorganic acid salts and organic acid salts. Examples of inorganic acid salts include hydrochlorides, sulfates, nitrates, and phosphates. Examples of organic acid salts include acetates, maleates, fumarates, citrates, malates, lactates, α-ketoglutarates, gluconates, and caprylates.

Examples of metal salts include alkali metal salts, alkaline earth metal salts, aluminum salts, and zinc salts. Examples of alkali metal salts include sodium salts and potassium salts. Examples of alkaline earth metal salts include magnesium salts and calcium salts. Examples of substituted or unsubstituted ammonium salts include ammonium salts and tetramethylammonium salts.

Examples of organic amine addition salts include salts of morpholine, piperidine and the like. Examples of amino acid addition salts include salts of glycine, phenylalanine, lysine, aspartic acid, glutamic acid and the like. The above-described salts may be used alone or in combination of two or more. The salt of CDP-choline is preferably a sodium salt.

In the packaged beverage according to one embodiment, the content of CDP-choline or a salt thereof is 1 to 500 mg/100 mL. The content of CDP-choline or a salt thereof may be 3 mg/100 mL or more, 5 mg/100 mL or more, 8 mg/100 mL or more, 10 mg/100 mL or more, 30 mg/100 mL or more, 35.3 mg/100 mL or more, 36 mg/100 mL or more, 40 mg/100 mL or more, 50 mg/100 mL or more, 80 mg/100 mL or more, 100 mg/100 mL or more, 130 mg/100 mL or more, 160 mg/L or more, 190 mg/L or more, 220 mg/L or more, 250 mg/L or more, or 280 mg/L or more, and may be 480 mg/100 mL or less, 460 mg/100 mL or less, or 450 mg/100 mL or less.

In the present specification, the content of CDP-choline or a salt thereof is determined by high performance liquid chromatography (HPLC). In the present specification, the content of CDP-choline or a salt thereof means an amount in terms of CDP-choline. The HPLC conditions are as follows. When the sample contains substances that interfere with analysis or when the sample concentration is low, appropriate pretreatment is performed before HPLC analysis. Instruments used: system controller (CBM-20A), detector (SPD-20A), pump (LC-20AT), autosampler (SIL-20ACXR), column oven (CTO-10ASvp), data analysis software (LabSolutions Version 5.85) (all manufactured by Shimadzu Corporation)
Detector: ultraviolet spectrophotometer (measurement wavelength: 254 nm)
Column: Shodex Asahipak NH2P-50 4E 4.6×250 mm (manufactured by Showa Denko K.K.)
Mobile phase: 0.03 mol/L potassium dihydrogen phosphate aqueous solution adjusted to pH 3.5 with phosphoric acid (20.41 g of potassium dihydrogen phosphate was dissolved in 5 L of distilled water, and then phosphoric acid was added to adjust to pH 3.5).
Column temperature: 40°C
Flow rate: 0.50 mL/min
Sample injection volume: 10 µL
Retention time: CDP-choline 7.3 min
The sample solution is adjusted and diluted so as to approach the CDP-choline concentration of the standard, and used for analysis. The concentration of CDP-choline in the sample solution is quantified by a one-point calibration curve method from the peak area value of the standard.
For example, when 0.02 g/L of CDP-choline is used as the standard, if the peak area value of the CDP-choline standard is A and the peak area value of the sample solution diluted x-fold is B, it is calculated as follows: (CDP-choline concentration in the sample solution (g/L)) = 0.02 × B/A × x.

In the packaged beverage according to one embodiment, the ratio of the content of CDP-choline or a salt thereof to the total content of the protein and/or the lipid ((content of CDP-choline or a salt thereof (mass)/total content of protein and/or lipid (mass)) × 100) may be 0.1% or more, 0.5% or more, 1% or more, 1.5% or more, 2% or more, 2.5% or more, 3% or more, 5% or more, or 10% or more, and may be 50% or less, 40% or less, or 35% or less.

The packaged beverage may further contain a plant-derived component. The plant-derived component may be, for example, a plant extract. A plant extract means an extract liquid obtained by subjecting a plant raw material to an extraction treatment using a solvent, or a processed product thereof. The processed product of the extract liquid may be a concentrate of the extract liquid (for example, a concentrated liquid extract), a dried product (for example, a powdered extract, a particulate extract) or the like. As the solvent, for example, water can be used. The water is preferably hot water at 70°C or higher.

The plant raw material is, for example, a plant body such as a fruit, seed, or leaf of a plant, or a processed product thereof, and may be a coffee raw material, a tea raw material, a cacao raw material or the like. A coffee raw material means coffee beans and processed products thereof. Examples of coffee raw materials include green coffee beans, roasted coffee beans, coffee cherries, and ground products thereof. A tea raw material means tea leaves and stems and processed products thereof. Examples of tea raw materials include non-fermented teas such as green tea, semi-fermented teas such as oolong tea, fermented teas such as black tea, and ground products thereof. A cacao raw material means cacao beans and processed products thereof. Examples of cacao raw materials include cacao mass and cocoa powder.

In the present specification, a plant extract obtained using a coffee raw material as the plant raw material is referred to as a coffee extract, a plant extract obtained using a tea raw material as the plant raw material is referred to as a tea extract, and a plant extract obtained using a cacao raw material as the plant raw material is referred to as a cacao extract. Examples of coffee extracts include instant coffee.

As the plant-derived component, the above-described plant raw materials themselves can also be used. When the plant raw material itself is used, it is preferably a ground plant product obtained by subjecting the plant to at least one grinding treatment (for example, a pulverizing treatment). Examples of ground plant products include matcha and cocoa powder.

The plant-derived component may contain a polyphenol. A polyphenol is a compound having a plurality of phenolic hydroxyl groups. In a beverage, when a protein and/or a lipid and a plant-derived polyphenol coexist, floating matter and sediment due to aggregation of the protein and/or the lipid are particularly likely to occur. However, the above-described packaged beverage has excellent dispersion stability even when the plant-derived component contains a polyphenol.

Examples of polyphenols include monomeric polyphenols and polymeric polyphenols, which are polymers of monomeric polyphenols. Examples of monomeric polyphenols include flavonoids and phenylpropanoids. Examples of flavonoids include catechins such as epicatechin, epigallocatechin, epicatechin gallate, epigallocatechin gallate, catechin, gallocatechin, catechin gallate, and gallocatechin gallate, anthocyanins, and isoflavones. Examples of phenylpropanoids include caffeic acid, chlorogenic acid, and sesamin.

Examples of polymeric polyphenols include condensed tannins such as proanthocyanidins (for example, procyanidins, which are polymers of catechins), and hydrolyzable tannins such as gallotannins.

Examples of plant-derived components containing polyphenols include, for example, a coffee raw material, a coffee extract, a tea raw material, a tea extract, a cacao raw material, and a cacao extract. In general, coffee raw materials and coffee extracts contain chlorogenic acid, tea raw materials and tea extracts contain catechins, and cacao raw materials and cacao extracts contain catechins.

As the plant-derived component, one of the above-described materials may be used alone, or two or more thereof may be used in combination. The packaged beverage according to one embodiment may be a packaged coffee beverage, a packaged tea beverage, or a packaged cacao beverage. In the present specification, a beverage mainly containing a coffee raw material or a coffee extract as the plant-derived component is referred to as a coffee beverage, a beverage mainly containing a tea raw material or a tea extract as the plant-derived component is referred to as a tea beverage, and a beverage mainly containing a cacao raw material or a cacao extract as the plant-derived component is referred to as a cacao beverage.

The content of polyphenol in the packaged beverage is not particularly limited, but may be 0.0001 g/100 mL or more, or 0.001 g/100 mL or more, and may be 10.00 g/100 mL or less, or 1.00 g/100 mL or less.

The packaged beverage according to one embodiment may contain other components in addition to the above-described components. Examples of other components include food additives such as saccharides, sweeteners, acidulants, flavoring agents, colorants, bittering agents, preservatives, antioxidants, thickening stabilizers, emulsifiers, dietary fiber, pH adjusters, enzymes, and fortifying agents. Examples of pH adjusters include sodium hydrogen carbonate (baking soda), potassium carbonate, potassium phosphate, and sodium citrate. The above-described components may be used alone or in combination of two or more.

The content of other components may be, for example, 0.01 g/100 mL or more, and may be 10.00 g/100 mL or less. When the packaged beverage contains a pH adjuster, the content of the pH adjuster in the packaged beverage may be 0.01 g/100 mL or more, and may be 0.50 g/100 mL or less, 0.20 g/100 mL or less, or 0.10 g/100 mL or less.

The above-described packaged beverage, by containing CDP-choline or a salt thereof, has excellent stability even when the content of an emulsifier or a thickening polysaccharide is low, or even when they are not contained. The packaged beverage may have an emulsifier content of 0 to 3 g/100 mL, and may be substantially free of an emulsifier. In addition, the packaged beverage may have a thickening polysaccharide content of 0 to 3 g/100 mL, and may be substantially free of a thickening polysaccharide. The expression "substantially free of" an emulsifier or a thickening polysaccharide means that the emulsifier or the thickening polysaccharide is not contained at all, or is contained only in an amount less than the amount at which the function as an emulsifier or a thickening polysaccharide can be exerted.

The pH of the packaged beverage is not particularly limited, but may be, for example, 3.0 or higher, and may be 7.5 or lower. In addition, the pH of the packaged beverage may be 5.5 or higher, and may be 7.0 or lower. Note that the pH of the packaged beverage means the pH of the beverage filled in the container.

The packaged beverage is a heat-sterilized packaged beverage. In the present specification, "heat sterilization" means a heat treatment by a method having sufficient efficacy to kill microorganisms capable of growing in the packaged beverage. Heat sterilization is not particularly limited, but may be carried out by, for example, a method in which the center of the packaged beverage is maintained at a temperature of 65°C or higher for 10 minutes or longer, a method in which the center of the packaged beverage is maintained at a temperature of 85°C or higher for 30 minutes or longer, a method in which the center of the packaged beverage is maintained at a temperature of 120°C or higher for 4 minutes or longer, or a method equivalent thereto. Heat sterilization can be carried out by, for example, a retort sterilization method, a UHT sterilization method or the like.

The container constituting the packaged beverage may be any container commonly used for storing beverages, and can be appropriately selected according to the type of beverage. Examples of containers include metal cans, barrel containers, plastic (e.g., PET) bottles, paper containers, bottles, pouch containers, and the like. The container is preferably a metal can, a plastic (e.g., PET) bottle, or a bottle.

The above-described heat-sterilized packaged beverage, by containing CDP-choline or a salt thereof, has excellent dispersion stability despite containing a raw material containing a protein and/or a lipid (for example, a milk raw material). Therefore, the present invention can also be understood as a dispersion stabilizer for a packaged beverage containing a protein and/or a lipid, the dispersion stabilizer containing CDP-choline or a salt thereof as an active ingredient.

In the packaged beverage to which the dispersion stabilizer for a packaged beverage containing a protein and/or a lipid (hereinafter also simply referred to as "dispersion stabilizer") is applied, the total content of the protein and/or the lipid may be 0.1 to 12 g/100 mL. The total content of the protein and/or the lipid may be within the numerical range described above as the total content of the protein and/or the lipid in the packaged beverage.

In addition, the packaged beverage to which the dispersion stabilizer is applied may contain a milk raw material. As the milk raw material, those described above can be used without particular limitation. The packaged beverage to which the dispersion stabilizer is applied may further contain a plant-derived component, and may further contain other components. As the plant-derived component and other components, those described above as the plant-derived component and other components that can be contained in the packaged beverage can be used without particular limitation. The content of polyphenol, the content of other components, the content of the pH adjuster, and the content of baking soda may each be within the numerical ranges described above as the content of polyphenol, the content of other components, the content of the pH adjuster, and the content of baking soda in the packaged beverage.

The dispersion stabilizer may be one that is added to the packaged beverage, which is then heat-sterilized. The details of heat sterilization may be as described above.

The dispersion stabilizer may be used such that the ratio of the content of CDP-choline or a salt thereof to the total content of the protein and/or the lipid in the packaged beverage falls within the numerical range described above.

The dispersion stabilizer may consist only of CDP-choline or a salt thereof, which is the active ingredient, or may further contain components other than CDP-choline and a salt thereof. Examples of components other than CDP-choline and a salt thereof include emulsifiers and thickening polysaccharides.

The above-described packaged beverage is produced by, for example, the following method. A production method for a packaged beverage according to one embodiment includes: preparing a raw material liquid containing a protein and/or a lipid, and CDP-choline or a salt thereof, wherein the total content of the protein and/or the lipid is 0.1 to 12 g/100 mL and the content of CDP-choline or a salt thereof is 1 to 500 mg/100 mL; and heat-sterilizing the raw material liquid.

The total content of the protein and/or the lipid and the content of CDP-choline or a salt thereof in the raw material liquid may each be within the numerical ranges described above as the total content of the protein and/or the lipid and the content of CDP-choline or a salt thereof in the packaged beverage. The ratio of the content of CDP-choline or a salt thereof to the total content of the protein and/or the lipid in the raw material liquid may be within the numerical range described above as the ratio of the content of CDP-choline or a salt thereof to the total content of the protein and/or the lipid in the packaged beverage.

The raw material liquid may contain a milk raw material. As the milk raw material contained in the raw material liquid, those described above as the milk raw material contained in the packaged beverage can be used without particular limitation. The raw material liquid may further contain a plant-derived component, and may further contain other components. As the plant-derived component and other components, those described above as the plant-derived component and other components that can be contained in the packaged beverage can be used without particular limitation. The content of polyphenol, the content of other components, the content of the pH adjuster, and the content of baking soda in the raw material liquid may each be within the numerical ranges described above as the content of polyphenol, the content of other components, the content of the pH adjuster, and the content of baking soda in the packaged beverage.

The protein and/or the lipid in the raw material liquid may contain an animal-derived protein and/or lipid, and may also contain a plant-derived protein and/or lipid. In one embodiment, the protein and/or the lipid may be an animal-derived protein and/or lipid. In another embodiment, the protein and/or the lipid may be a plant-derived protein and/or lipid.

The above-described raw material liquid can be prepared by, for example, mixing a raw material containing a protein and/or a lipid (for example, a milk raw material), CDP-choline or a salt thereof, a plant-derived component if necessary, other components if necessary, and water. Preparing the raw material liquid may include, for example, preparing liquid A containing a plant-derived component and water, liquid B containing a raw material containing a protein and/or a lipid and if necessary, water, and liquid C containing CDP-choline or a salt thereof and water, separately, and mixing liquid A, liquid B, and liquid C. Liquid A, liquid B, and liquid C may each independently further contain other components described above as those that can be contained in the packaged beverage. As liquid B, a plurality of liquids having different compositions from each other (for example, having different types of raw materials containing a protein and/or a lipid) may be used.

Mixing liquid A, liquid B, and liquid C may include, for example, adding liquid B to liquid A and mixing them to prepare mixed liquid AB, and adding liquid C to mixed liquid AB and mixing them.

Heat sterilization of the raw material liquid is carried out by a method having sufficient efficacy to kill microorganisms capable of growing in the raw material liquid. The specific method of carrying out heat sterilization may be as described above.

The production method according to one embodiment may include filling a container with the raw material liquid. The raw material liquid may be a raw material liquid before heat sterilization or a raw material liquid after heat sterilization. That is, filling a container with the raw material liquid may be performed before heat-sterilizing the raw material liquid, or may be performed after heat-sterilizing the raw material liquid. As the container, for example, those described above as the containers for the packaged beverage can be used.

The heat-sterilized packaged beverage produced by the above-described method has excellent dispersion stability by containing a protein and/or a lipid together with CDP-choline or a salt thereof. One embodiment of the present invention is a method for stabilizing dispersion of a packaged beverage containing a protein and/or a lipid, including: preparing a raw material liquid containing a protein and/or a lipid, and CDP-choline or a salt thereof, wherein the total content of the protein and/or the lipid is 0.1 to 12 g/100 mL and the content of CDP-choline or a salt thereof is 1 to 500 mg/100 mL; and heat-sterilizing the raw material liquid. Any of the aspects of the above-described production method can be applied as specific aspects of the present method without particular limitation.

### Examples

Hereinafter, the present invention will be described more specifically based on examples. However, the present invention is not limited to the following examples.

### 1. Preparation of Samples (Beverages)

Samples of Test Examples 1-1 to 1-3, 2-1 to 2-3, 3-1 to 3-4, 4-1 to 4-3, and 6-1 to 6-2 were prepared by the following method. The pH of the prepared samples was 6 to 7.

Each sample was prepared in a volume of 1000 mL per test example. Commercially available instant coffee (15 g) and a predetermined amount of baking soda (sodium hydrogen carbonate) were dissolved in 10-fold and 30-fold amounts of hot water, respectively, and the resulting solutions were mixed and stirred sufficiently to prepare an instant coffee solution. Next, a predetermined amount of whole milk powder was dissolved in a 5-fold amount of hot water and stirred sufficiently to prepare a solution, which was then added to the above-described instant coffee solution to prepare a coffee base liquid. Furthermore, a solution prepared by dissolving a predetermined amount of CDP-choline powder in a 10-fold amount of water was added to the above-described coffee base liquid, and water was added to bring the total volume to 1000 mL, thereby preparing a sample of a milk-containing coffee beverage. The blending amounts of each component based on the total amount of the sample were as shown in Tables 1 to 4 and 6. The whole milk powder used had a total content of protein and lipid of 60% by mass (protein 34% by mass, lipid 26% by mass) based on the total amount of the whole milk powder. The instant coffee used had a total content of protein and lipid of 15% by mass (protein 10% by mass, lipid 5% by mass) and a polyphenol content of 12% by mass, based on the total amount of the instant coffee.

In addition, samples of Test Examples 5-1 to 5-2 were prepared in the same manner as described above, except that a predetermined amount of soy milk was used in place of the solution prepared by dissolving a predetermined amount of whole milk powder in a 5-fold amount of hot water and stirring sufficiently when preparing the coffee base liquid. In addition, samples of Test Examples 7-1 to 7-3 and Test Example 8-1 were prepared in the same manner as Test Examples 5-1 to 5-2, except that the amount of soy milk was adjusted and the amount of hot water for dissolving the instant coffee, baking soda, and CDP-choline was adjusted so as to obtain a 1000 mL sample. In Test Examples 5-1 to 5-2 and Test Examples 7-1 to 7-3, the soy milk used had a total content of protein and lipid of 8.3% by mass (protein 4.8% by mass, lipid 3.5% by mass) based on the total amount of the soy milk. In Test Example 8-1, the soy milk used had a total content of protein and lipid of 10.8% by mass (protein 6.8% by mass, lipid 4.0% by mass) based on the total amount of the soy milk. The blending amounts of each component based on the total amount of the sample were as shown in Tables 5 and 7 to 8. The pH of the prepared samples was 6 to 7.

Samples of Test Examples 9-1 to 9-2 and 11-1 were prepared in the same manner as the sample of Test Example 8-1 described above, except that a predetermined amount of sodium caseinate (casein Na) was added to the above-described instant coffee solution together with a predetermined amount of soy milk when preparing the coffee base liquid. The casein Na used had a total content of protein and lipid of 92.7% by mass (protein 92% by mass, lipid 0.7% by mass) based on the total amount of the casein Na. The blending amounts of each component based on the total amount of the sample were as shown in Tables 9 and 11. The fact that the blending amount of soy milk in the sample of Test Example 11-1 exceeds 100 g/100 mL is due to the density of the soy milk used in Test Example 11-1 (as well as in Test Examples 8-1, and 9-1 to 9-2, and Test Examples 10-1 to 10-3 described below) being 104 g/100 mL. The pH of the prepared samples was 6 to 7.

Samples of Test Examples 10-1 to 10-3 were prepared in the same manner as the sample of Test Example 8-1 described above, except that a predetermined amount of cow's milk was added to the above-described instant coffee solution together with a predetermined amount of soy milk when preparing the coffee base liquid. The cow's milk used had a total content of protein and lipid of 7.3% by mass (protein 3.4% by mass, lipid 3.9% by mass) based on the total amount of the cow's milk. The blending amounts of each component based on the total amount of the sample were as shown in Table 10. The pH of the prepared samples was 6 to 7.

For the samples of Test Examples 1-1 to 1-3, 2-1 to 2-3, 3-1 to 3-4, 4-1 to 4-3, 5-1 to 5-2, 6-2, and 7-1 to 7-3, 190 mL of each prepared sample was filled into a metal can and heat-sterilized by a retort sterilization method under conditions of 121°C and 20 minutes. For the samples of Test Examples 8-1, 9-1 to 9-2, 10-1 to 10-3, and 11-1, 190 mL of each prepared sample was filled into a metal can and heat-sterilized by a retort sterilization method under conditions of 121°C and 5 minutes. These conditions were set so that the center of the sample filled in the metal can was maintained at a temperature of 120°C or higher for 4 minutes or longer. In Test Example 6-1, the sample was not heat-sterilized.

### 2. Analysis

The dispersion stability of the samples of each test example obtained by the above-described method was evaluated using a Lumisizer (manufactured by LUM). The Lumisizer (manufactured by LUM) is a device capable of acquiring, in real time, a transmitted light intensity profile from the opening to the bottom of a measurement cell while applying centrifugal force to a sample placed in the measurement cell. In the Lumisizer, the movement of particles (for example, oil droplets) contained in the sample is accelerated by centrifugal force acting in the depth direction of the measurement cell. The transmitted light intensity at a specific location in the measurement cell represents the dispersibility of particles in the sample at that location; for example, the transmitted light intensity is low at a location where many particles are present, while it is high at a location corresponding to the supernatant. Therefore, by acquiring the transmitted light intensity profile over time, changes in dispersibility at each location can be examined.

Each sample was diluted with water so that the total content of protein and lipid was 0.5 g/100 mL to prepare a measurement sample. Each prepared measurement sample was placed in a rectangular cell designed for 0.4 mL (made of polycarbonate, optical path 2 mm). Three measurement cells were prepared for each test example (N = 3). For each measurement cell, the Instability Index (hereinafter also referred to as "I.I.") was calculated as follows. First, at a temperature of 25°C, a transmitted light intensity profile at a wavelength of 865 nm was acquired for 50 minutes at 10-second intervals while applying centrifugal force at 1000 rpm. From the transmitted light intensity data acquired for the range from the bottom of the rectangular cell to 10 mm, the I.I. was calculated by the method reported by T. Detloff et al. (Dispersion Letters Technical, T4 (2013) 1-4, Update 2014). The arithmetic mean value of the I.I. data obtained as described above for each of the three measurement cells (the mean I.I. value of the sample) was calculated. An I.I. value closer to 1 indicates a greater change over time (i.e., greater instability).

In addition, a sample prepared in the same manner as each sample except that CDP-choline was not contained was prepared each time for each experiment as a control sample for the sample of each test example, and the mean I.I. value of the control sample (mean I.I. value of the control sample) was determined in the same manner as described above. Then, for each sample, the improvement rate of I.I. was determined by the following formula. In addition, a one-sided t-test was performed to determine whether the I.I. value of the sample was smaller (or larger) than the I.I. value of the target sample, and the p-value was calculated. The results are shown in Tables 1 to 11. $\begin{matrix}Improvement rate of I . I . = \\ 1 - \left(mean I.I. value of sample/mean I.I. value of control sample\right) \\ \times 100\end{matrix}$

**[Table 1]**

| | Test Example 1-1 | Test Example 1-2 | Test Example 1-3 |
|---|---|---|---|
| Whole milk powder (g/100 mL) | 2.00 | 2.00 | 2.00 |
| Instant coffee (g/100 mL) | 1.50 | 1.50 | 1.50 |
| CDP-choline (mg/100 mL) | 5 | 10 | 15 |
| Baking soda (g/100 mL) | 0.06 | 0.06 | 0.06 |
| Total content of protein and lipid in beverage (g/100 mL) | 1.4 | 1.4 | 1.4 |
| Mean Instability Index | 0.121 | 0.118 | 0.112 |
| Mean Instability Index of control sample | 0.125 | 0.125 | 0.125 |
| p-value | 6.4×10⁻² | 9.9×10⁻³ | 2.5×10⁻³ |
| Improvement rate of Instability Index | 3% | 6% | 10% |

**[Table 2]**

| | Test Example 2-1 | Test Example 2-2 | Test Example 2-3 |
|---|---|---|---|
| Whole milk powder (g/100 mL) | 2.00 | 2.00 | 2.00 |
| Instant coffee (g/100 mL) | 1.50 | 1.50 | 1.50 |
| CDP-choline (mg/100 mL) | 150 | 300 | 450 |
| Baking soda (g/100 mL) | 0.12 | 0.12 | 0.12 |
| Total content of protein and lipid in beverage (g/100 mL) | 1.4 | 1.4 | 1.4 |
| Mean Instability Index | 0.162 | 0.134 | 0.057 |
| Mean Instability Index of control sample | 0.184 | 0.184 | 0.184 |
| p-value | 1.1×10⁻⁴ | 6.9×10⁻⁵ | 2.3×10⁻⁵ |
| Improvement rate of Instability Index | 12% | 27% | 69% |

**[Table 3]**

| | Test Example 3-1 | Test Example 3-2 | Test Example 3-3 | Test Example 3-4 |
|---|---|---|---|---|
| Whole milk powder (g/100 mL) | 0.83 | 1.67 | 3.33 | 6.67 |
| Instant coffee (g/100 mL) | 1.50 | 1.50 | 1.50 | 1.50 |
| CDP-choline (mg/100 mL) | 150 | 150 | 150 | 150 |
| Baking soda (g/100 mL) | 0.12 | 0.12 | 0.12 | 0.12 |
| Total content of protein and lipid in beverage (g/100 mL) | 0.7 | 1.2 | 2.2 | 4.2 |
| Mean Instability Index | 0.252 | 0.246 | 0.263 | 0.235 |
| Mean Instability Index of control sample | 0.254 | 0.265 | 0.294 | 0.275 |
| p-value | 1.0×10⁻¹ | 2.8×10⁻³ | 4.4×10⁻³ | 2.1×10⁻³ |
| Improvement rate of Instability Index | 1% | 7% | 10% | 15% |

**[Table 4]**

| | Test Example 4-1 | Test Example 4-2 | Test Example 4-3 |
|---|---|---|---|
| Whole milk powder (g/100 mL) | 1.29 | 6.29 | 9.63 |
| Instant coffee (g/100 mL) | 1.50 | 1.50 | 1.50 |
| CDP-choline (mg/100 mL) | 40 | 40 | 40 |
| Baking soda (g/100 mL) | 0.06 | 0.06 | 0.06 |
| Total content of protein and lipid in beverage (g/100 mL) | 1.0 | 4.0 | 6.0 |
| Mean Instability Index | 0.195 | 0.175 | 0.170 |
| Mean Instability Index of control sample | 0.218 | 0.193 | 0.177 |
| p-value | 1.3×10⁻³ | 2.4×10⁻³ | 2.2×10⁻² |
| Improvement rate of Instability Index | 11% | 9% | 4% |

**[Table 5]**

| | Test Example 5-1 | Test Example 5-2 |
|---|---|---|
| Soy milk (g/100 mL) | 9.30 | 21.40 |
| Instant coffee (g/100 mL) | 1.50 | 1.50 |
| CDP-choline (mg/100 mL) | 40 | 40 |
| Baking soda (g/100 mL) | 0.06 | 0.06 |
| Total content of protein and lipid in beverage (g/100 mL) | 1.0 | 2.0 |
| Mean Instability Index | 0.172 | 0.203 |
| Mean Instability Index of control sample | 0.219 | 0.224 |
| p-value | 3.3×10⁻³ | 7.0×10⁻³ |
| Improvement rate of Instability Index | 21% | 9% |

**[Table 6]**

| | Test Example 6-1 | Test Example 6-2 |
|---|---|---|
| Whole milk powder (g/100 mL) | 1.67 | 1.67 |
| Instant coffee (g/100 mL) | 1.50 | 1.50 |
| CDP-choline (mg/100 mL) | 150 | 150 |
| Baking soda (g/100 mL) | 0.12 | 0.12 |
| Total content of protein and lipid in beverage (g/100 mL) | 1.2 | 1.2 |
| Heat sterilization | None | Yes |
| Mean Instability Index | 0.297 | 0.246 |
| Mean Instability Index of control sample | 0.273 | 0.265 |
| p-value | 3.4×10⁻³ | 2.8×10⁻³ |
| Improvement rate of Instability Index | -9% | 7% |

**[Table 7]**

| | Test Example 7-1 | Test Example 7-2 | Test Example 7-3 |
|---|---|---|---|
| Soy milk (g/100 mL) | 94.60 | 94.60 | 94.60 |
| Instant coffee (g/100 mL) | 1.00 | 1.00 | 1.00 |
| CDP-choline (mg/100 mL) | 50 | 150 | 300 |
| Baking soda (g/100 mL) | 0.06 | 0.06 | 0.06 |
| Total content of protein and lipid in beverage (g/100 mL) | 8.0 | 8.0 | 8.0 |
| Mean Instability Index | 0.169 | 0.128 | 0.092 |
| Mean Instability Index of control sample | 0.177 | 0.177 | 0.177 |
| p-value | 1.7×10⁻² | 9.8×10⁻⁴ | 1.6×10⁻⁴ |
| Improvement rate of Instability Index | 5% | 28% | 48% |

**[Table 8]**

| | Test Example 8-1 |
|---|---|
| Soy milk (g/100 mL) | 92.79 |
| Instant coffee (g/100 mL) | 1.00 |
| CDP-choline (mg/100 mL) | 300 |
| Baking soda (g/100 mL) | 0.12 |
| Total content of protein and lipid in beverage (g/100 mL) | 10.2 |
| Mean Instability Index | 0.119 |
| Mean Instability Index of control sample | 0.132 |
| p-value | 4.7×10⁻³ |
| Improvement rate of Instability Index | 10% |

**[Table 9]**

| | Test Example 9-1 | Test Example 9-2 |
|---|---|---|
| Soy milk (g/100 mL) | 92.57 | 92.57 |
| Casein Na (g/100 mL) | 0.025 | 0.025 |
| Instant coffee (g/100 mL) | 1.04 | 1.04 |
| CDP-choline (mg/100 mL) | 100 | 300 |
| Baking soda (g/100 mL) | 0.12 | 0.12 |
| Total content of protein and lipid in beverage (g/100 mL) | 10.2 | 10.2 |
| Mean Instability Index | 0.121 | 0.112 |
| Mean Instability Index of control sample | 0.125 | 0.125 |
| p-value | 1.9×10⁻² | 1.2×10⁻² |
| Improvement rate of Instability Index | 3% | 10% |

**[Table 10]**

| | Text Example 10-1 | Text Example 10-2 | Text Example 10-3 |
|---|---|---|---|
| Soy milk (g/100 mL) | 92.57 | 92.57 | 92.57 |
| Cow's milk (g/100 mL) | 0.25 | 0.25 | 0.25 |
| Instant coffee (g/100 mL) | 1.04 | 1.04 | 1.04 |
| CDP-choline (mg/100 mL) | 50 | 100 | 300 |
| Baking soda (g/100 mL) | 0.12 | 0.12 | 0.12 |
| Total content of protein and lipid in beverage (g/100 mL) | 10.2 | 10.2 | 10.2 |
| Mean Instability Index | 0.119 | 0.116 | 0.105 |
| Mean Instability Index of control sample | 0.123 | 0.123 | 0.123 |
| p-value | 4.1×10⁻³ | 9.9×10⁻³ | 7.1×10⁻⁴ |
| Improvement rate of Instability Index | 3% | 6% | 14% |

**[Table 11]**

| | Text Example 11-1 |
|---|---|
| Soy milk (g/100 mL) | 101.40 |
| Casein Na (g/100 mL) | 0.03 |
| Instant coffee (g/100 mL) | 0.52 |
| CDP-choline (mg/100 mL) | 300 |
| Baking soda (g/100 mL) | 0.12 |
| Total content of protein and lipid in beverage (g/100 mL) | 11.1 |
| Mean Instability Index | 0.125 |
| Mean Instability Index of control sample | 0.142 |
| p-value | 7.3×10⁻³ |
| Improvement rate of Instability Index | 12% |

From the results of Test Examples 1-1 to 1-3, 2-1 to 2-3, 3-1 to 3-4, and 4-1 to 4-3 (Tables 1 to 4), when the total content of protein and/or lipid in the beverage was within the range of 0.1 to 12 g/100 mL and the content of CDP-choline was within the range of 1 to 500 mg/100 mL, an improvement in I.I. was observed, and the dispersion stabilizing effect of CDP-choline on the beverage was confirmed. In addition, from the results of Test Examples 5-1 to 5-2 (Table 5), it became clear that the dispersion stabilizing effect of CDP-choline on the beverage was also observed even when the protein and lipid in the beverage did not contain animal-derived protein and lipid and were plant-derived protein and lipid. From the results of Test Examples 6-1 to 6-2 (Table 6), it was found that the dispersion stabilizing effect of CDP-choline on the beverage was exhibited by heat-sterilizing the beverage.

From the results of Test Examples 7-1 to 7-3 and 8-1 (Tables 7 to 8), and the results of Test Examples 9-1 to 9-2, 10-1 to 10-3, and 11-1 (Tables 9 to 11), it was confirmed that the dispersion stabilizing effect of CDP-choline on the beverage was observed both in the case where the protein and lipid in the beverage did not contain animal-derived protein and lipid and were plant-derived protein and lipid, and in the case where the protein and lipid in the beverage contained animal-derived protein and lipid.

## Claims

1. A heat-sterilized packaged beverage comprising a protein and/or a lipid, and CDP-choline or a salt thereof,
wherein a total content of the protein and/or the lipid is 0.1 to 12 g/100 mL,
wherein a content of CDP-choline or a salt thereof is 1 to 500 mg/100 mL, and
wherein the protein and/or the lipid comprises an animal-derived protein and/or lipid.

2. The packaged beverage according to claim 1, further comprising a plant-derived component.

3. The packaged beverage according to claim 2, wherein the plant-derived component comprises a polyphenol.

4. The packaged beverage according to any one of claims 1 to 3, comprising a milk raw material,
wherein the milk raw material is one or more selected from the group consisting of cow's milk, whole milk powder, skim milk powder, cream, whey, and a salt of casein.

5. The packaged beverage according to any one of claims 1 to 3, wherein the total content of the protein and/or the lipid is 0.5 to 8 g/100 mL.

6. The packaged beverage according to claim 2 or 3, wherein the plant-derived component is a coffee extract and the packaged beverage is a coffee beverage.

7. A production method for a packaged beverage, comprising:
preparing a raw material liquid comprising a protein and/or a lipid, and CDP-choline or a salt thereof, wherein a total content of the protein and/or the lipid is 0.1 to 12 g/100 mL, a content of CDP-choline or a salt thereof is 1 to 500 mg/100 mL, and the protein and/or the lipid comprises an animal-derived protein and/or lipid; and
heat-sterilizing the raw material liquid.

8. The production method according to claim 7, wherein the raw material liquid further comprises a plant-derived component.

9. The production method according to claim 8, wherein the plant-derived component comprises a polyphenol.

10. The production method according to any one of claims 7 to 9, wherein the raw material liquid comprises a milk raw material, and
wherein the milk raw material is one or more selected from the group consisting of cow's milk, whole milk powder, skim milk powder, cream, whey, and a salt of casein.

11. The production method according to claim 8 or 9, wherein the plant-derived component is a coffee extract and the packaged beverage is a coffee beverage.

12. A dispersion stabilizer for a packaged beverage comprising a protein and/or a lipid, the dispersion stabilizer comprising CDP-choline or a salt thereof as an active ingredient.

13. A method for stabilizing dispersion of a packaged beverage comprising a protein and/or a lipid, comprising:
preparing a raw material liquid comprising a protein and/or a lipid, and CDP-choline or a salt thereof, wherein a total content of the protein and/or the lipid is 0.1 to 12 g/100 mL, a content of CDP-choline or a salt thereof is 1 to 500 mg/100 mL, and the protein and/or the lipid comprises an animal-derived protein and/or lipid; and
heat-sterilizing the raw material liquid.

14. A heat-sterilized packaged beverage comprising a protein and/or a lipid, and CDP-choline or a salt thereof,
wherein a total content of the protein and/or the lipid is 0.1 to 12 g/100 mL,
wherein a content of CDP-choline or a salt thereof is 36 to 500 mg/100 mL, and
wherein the protein and/or the lipid is a plant-derived protein and/or lipid.

15. A production method for a packaged beverage, comprising:
preparing a raw material liquid comprising a protein and/or a lipid, and CDP-choline or a salt thereof, wherein a total content of the protein and/or the lipid is 0.1 to 12 g/100 mL, a content of CDP-choline or a salt thereof is 36 to 500 mg/100 mL, and the protein and/or the lipid is a plant-derived protein and/or lipid; and
heat-sterilizing the raw material liquid.

16. A method for stabilizing dispersion of a packaged beverage comprising a protein and/or a lipid, comprising:
preparing a raw material liquid comprising a protein and/or a lipid, and CDP-choline or a salt thereof, wherein a total content of the protein and/or the lipid is 0.1 to 12 g/100 mL, a content of CDP-choline or a salt thereof is 36 to 500 mg/100 mL, and the protein and/or the lipid is a plant-derived protein and/or lipid; and
heat-sterilizing the raw material liquid.
